# EUROPEAN PATENT APPLICATION

(11) **EP 0 956 934 A1**
(43) Date of publication of application: **17.11.1999**
(21) Application number: 98303720.1
(22) Date of filing: 12.05.1998
(51) Int. Cl.: B27K 3/34, B27K 5/00

(54) **Protection of timber by arylpyrazoles**

(71) Applicant: Rhone Poulenc Agro, 69009 Lyon (FR)
(72) Inventor: Jermannaud, Alain, 33780 Soulac Sur Mer (FR)
(74) Representative: Bentham, Stephen

(57) **Abstract**

The present invention provides a method of protecting wood from insects and/or fungi by heating the wood and treatment with certain arylpyrazoles.

## Description

The present invention relates to a method of protecting wood, eg timber, from insects and/or fungi. The invention also relates to a new composition.

It is known that, in the natural state, wood or wood fibres which are in contact with a humid atmosphere have a tendency to absorb water, sometimes up to their own weight of water. The absorption of water is accompanied by swelling and by a loss of desired mechanical properties. Because of this it is customary for each step of machining of the wood to be preceded by a drying step. This reduces the water content of the wood and improves its dimensional stability.

Although the drying step reduces the water content of the wood it does not substantially modify its hydrophilic character. The wood is capable of reabsorbing the water eliminated by the drying when it is exposed to a humid atmosphere.

To reduce the hydrophilic character of the natural wood and thus impart to it a lasting dimensional stability, various techniques of heat treatment at high temperature have been proposed.

It has been proposed to subject the natural wood to various treatment steps comprising, for example, open circuit drying followed by progressive heating and by maintenance in a closed circuit at a temperature within the range between 180°C and 280°C. This does not permit the reliable achievement of dimensional stability and reduced hydrophilic character in the treated wood. Cracks and splits are often generated in the treated wood. Such cracks and splits are undesirable as they may reduce the mechanical strength of the wood and detract from its appearance.

It is known to cure wood at temperatures from 220°C to 300°C to improve its hydrophobicity and dimensional stability. However, it has been found that the curing operation has to be conducted with great care, to avoid damaging the mechanical properties of the treated wood. The purpose of this curing step is to destroy in part hemicellulose in the wood without however damaging the structure of the wood (by avoiding substantial destruction of lignin).

Timber is frequently used in building construction. Such timber is produced by cutting a tree into lengths of desired thickness. The timber thus obtained is distinguished from wood-based products used in building or furniture construction, such as chipped wood boards or particle boards or plywood. These wood-based products comprise, for example, particulate wood or sheets of wood bonded together by a bonding agent.

Unfortunately timber is often attacked by parasites, such as insects, particularly insects of the order *Isoptera*, more commonly know as termites. With certain insects like termites, the attacks may be so damaging so as to necessitate rebuilding part of a building which has lost its structural integrity.

Generally the protection of wood from biodegradation and/or insect attack has been realized by the use of preservatives. Generally these preservatives are highly toxic, noxious and require great care to prevent their release to the environment. Many known preservatives are now banned or may be banned. Examples of noxious preservatives include creosote, heavy metal salts and organochlorine compounds.

German patent publication DE 19548873 describes a wood preservation agent comprising fipronil and a synergistically active ingredient. This publication particularly teaches an admixture of fipronil and at least one fungicide and a solvent. It mentions that the mixture may also be used in industrial vacuum, double vacuum, or pressure treatment systems. This publication teaches that fipronil should be used in combination with another active ingredient in order to provide improved wood preservation.

The present invention adopts a different approach to the problem of wood preservation, combining heat-treatment of the wood and treatment with an arylpyrazole such as fipronil. For example, cracks and splits in wood, as well as reducing its mechanical strength and detracting from its appearance they may also provide a point of entry for insect and other pests. Furthermore, although the principal aim of wood curing may be to improve its mechanical properties the reduction in hemicellulose content may render the wood less palatable to wood-boring insects and therefore somewhat less prone to insect attack.

An object of the present invention is to provide improved timbers which are resistant to fungal and/or insect attack.

Another object of the present invention is to provide timbers which are resistant to insects, especially termites.

Another object of the present invention is to provide a method of treatment of timbers by an insecticide which is an easy and effective method.

Another object of the present invention is to provide a method of treatment of timber whereby the whole wood of the timber is treated by the insecticide.

Another object of the invention is to provide a method of wood preservation more environmentally acceptable than known methods.

These objects are met in whole or in part by the instant invention.

The present invention provides a method of protection of timber from fungi and/or insects comprising:
(a) heating the timber at a temperature and for a time effective to reduce its moisture and oil content;
(b) cooling the timber; and
(c) during or after steps (a) and (b)treating the timber with a liquid composition comprising, for example, consisting essentially of, a carrier and an arylpyrazoleof formula (I): 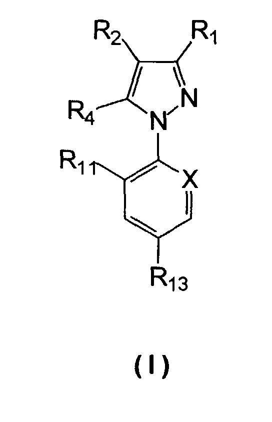 in which:
   R₁ is CN or methyl or a halogen atom;
   R₂ is -S(O)ₙR₃ or 4,5-dicyanoimidazol-2-yl or haloalkyl;
   R₃ is alkyl or haloalkyl;
   R₄ is selected from hydrogen, halogen, -NR₅R₆, - C(O)OR₇, -S(O)ₘR₇, alkyl, haloalkyl, -OR₈ and -
   N=C(R₉) (R₁₀) and C(O)alkyl;
      R₅ and R₆ are independently selected from a hydrogen atom, alkyl, haloalkyl, -C(O)alkyl, -C(O)OR₇, -S(O)ᵣCF₃;
      or R₅ and R₆ together form a divalent alkylene radical which can be interrupted by one or two divalent heteroatoms, such as oxygen or sulfur;
   R₇ is alkyl or haloalkyl;
   R₈ is alkyl, haloalkyl or hydrogen;
   R₉ is alkyl or hydrogen;
   R₁₀ is selected from phenyl and heteroaryl each of which is unsubstituted or substituted by one or more halogen, hydroxy, -O-alkyl, -S-alkyl, cyano, or alkyl;
   X is selected from nitrogen and C-R₁₂;
   R₁₁ and R₁₂ are independently selected from halogen, hydrogen, CN and NO₂;
   R₁₃ is selected from halogen, haloalkyl, haloalkoxy, S(O)_{q}CF₃ and -SF₅;
   m, n, q, and r are independently selected from 0, 1, and 2;
   provided that, when R₁ is methyl, R₃ is haloalkyl, R₄ is NH₂, R₁₁ is Cl, R₁₃ is CF₃ and X is N and provided that when R₂ is 4,5-dicyanoimidazol-2-yl, R₄ is Cl, R₁₁ is Cl, R₁₃ is CF₃ and X is =C-Cl.

It will be understood that the carrier is generally insecticidally and/or fungicidally acceptable.

The alkyl and alkoxy groups and moieties of the formula (I) are preferably lower alkyl and alkoxy groups, that is, groups having one to six carbon atoms. The haloalkyl and haloalkoxy groups likewise preferably have one to four carbon atoms. The haloalkyl and haloalkoxy groups can bear one or more halogen atoms; preferred groups of this type include -CF₃ and -OCF₃. It shall be understood that the ring formed by the divalent alkylene radical represented by R₅ and R₆ and including the nitrogen atom to which R₅ and R₆ are attached is generally a 5, 6, or 7-membered ring. When R₁₀ is heteroaryl, it is preferably pyridyl, most preferably 2-pyridyl. It will be understood that the 1-arylpyrazoles of formula (I) include enantiomers and/or diastereomers thereof and mixtures thereof.

A preferred group of 1-arylpyrazoles for use in the present invention are those of formula (I) with one or more of the following features:
R₁ is CN;
R₄ is -NR₅R₆;
R₅ and R₆ are independently selected from the hydrogen atom, alkyl, haloalkyl, C(O)alkyl, C(O)OR₇;X is C-R₁₂; orR₁₃ is selected from a halogen atom, haloalkyl, haloalkoxy, and -SF₅.

Another preferred group of 1-arylpyrazoles of formula (I) for use in the present invention is that wherein:
R₁ is CN;
R₃ is a haloalkyl radical;
R₄ is NH₂;
X is C-R₁₂;
R₁₁ and R₁₂ represent, independently of one another, a halogen atom; and
R₁₃ is a haloalkyl radical.

A most preferred compound is 5-amino-1-(2,6-dichloro-4-trifluoromethyl phenyl)-4-trifluoromethylsulfinyl-3-cyanopyrazole hereinafter referred to as Compound A.

Compounds of formula (I) may be prepared according to known processes, for example as described in International Patent Publications No. WO 87/3781, 93/6089 and 94/21606 as well as in European Patent Applications 295117, 403300, 385809 or 679650, German Patent Publication 19511269 and United States Patents 5232940 and 5236938 or other process according to the knowledge of a man skilled in the art of chemical synthesis.

The heating step (a) is generally conducted in such a manner so as to darken the woody substance of the timber. This darkening is an indication of a transformation of the ligno-cellulosic composition of the wood. The timber is heated at a temperature and for a time effective to remove moisture and oils, preferably to remove at least 50% by volume of the moisture and oil mixture present in the wood, more preferably at least 70% and most preferably at least 90%. The heating step (a) is generally effected in an autoclave or an oven or a reactor, or more simply in any kind of closed vessel, especially vessels able to endure the effect of high temperature and pressure. Generally the temperature needed is from 230°C to 450°C, preferably from 250°C to 400°C. Generally the time necessary for the heating is from ½ mn to 5 hours, preferably from 1 mn to 30 mn.

Preferably during the heating step (a) the piece of wood to be treated is subjected to a temperature equal to its glass transition temperature, and said piece of wood is maintained at this temperature until it has reached, in its entirety, said glass transition temperature. By maintaining the wood to be treated at its glass transition temperature for sufficient time to allow the entirety of its mass to reach this said temperature, the formation of splits and cracks in the wood may be substantially avoided during step (a).

Such a treatment may be carried out in a closed vessel where it is possible to subject the piece of wood to be treated to a progressive, for example linear, increase in temperature. It may also be carried out by immersion of the wood to be treated in a temperature-controlled bath, for example a liquid bath, or a solid bath formed of fine solid particles.

It is known that the glass transition temperature of a wood corresponds to the temperature range in which the rigid constituent elements of the wood lose their rigidity, so that the material passes from a rigid condition to a flexible condition; this permits the internal stresses of the wood to be released.

To determine the period over which the wood to be treated must be subjected to the glass transition temperature so that the entirety of the material should reach this temperature, it is possible to carry out, prior to the heat treatment operation, a series of tests on specimens of wood of the same species, of the same mass and substantially of the same dimensions, in which temperature sensors are disposed, in particular within the core of the material. By measuring the temperature at different points of the specimen it is possible to determine the period which is necessary for all the points of the specimen, and in particular the core, to reach the glass transition temperature. In an industrial treatment process the piece of wood to be treated may then be subjected to the glass transition temperature for this period. It may also be possible to dispose measuring sensors within a specimen serving as control and to stop the treatment when all the sensors, and in particular a sensor disposed within the core of this control, have reached the glass transition temperature.

It is possible to use this step to impart to the wood a desired shape or to densify the wood over all or part of its volume to improve its mechanical characteristics. Some of the moisture and oils within the wood may be removed during this procedure.

More preferably the quantity of at least one of the gases resulting from the decomposition of the hemicellulose is monitored during the heating step (a). Heating is interrupted either as soon as the quantity of gas begins to reach a substantially constant value, if heating is being carried out in a sealed system, or alternatively as soon as the gas being monitored ceases to be given off.

The wood to be treated may be disposed in a treatment enclosure equipped with a sensor sensitive to acetic acid and/or to carbon dioxide and/or to carbon monoxide.

The sensor may comprise a detector element composed of a metal oxide of the type permitting the detection of reducing gases which are generated. Preferably the metal oxide is a dioxide of tin or titanium.

In step (b) the timber may be cooled to ambient temperature. Preferably the timber is cooled to below the boiling point of the arylpyrazole composition which is to be used, step (c) is performed and the timber is then allowed to cool to ambient temperature. This may save time and absorption of the arylpyrazole composition may be improved.

Generally, during step (c), the treatment is effected by flooding or soaking or dipping the wood with the liquid composition. The composition is generally allowed to remain in contact with the timber for a period of from 0.25 to 96 hours, preferably from 0.5 hour to 10 hours, more preferably one hour to five hours. The treated timber is preferably allowed to rest to allow equilibration so that the concentration of the composition is even throughout the wood. Treatment step (c) may be carried out, for example, using vacuum, double vacuum or pressure methods.

Step (c) is generally carried out after step (b), preferably when the wood has cooled to room temperature or, possibly to a temperature from room temperature to the boiling point of the liquid composition comprising the arylpyrazole.

The heating step (a) may be carried out in a liquid bath or a bath of solid particles (the particles are generally fine particles). When a liquid bath is used the arylpyrazole may be incorporated in the bath. Step (c) is then combined with step (a). If the wood is then cooled in a liquid bath the treatment of step (c) may also be combined with step (b). Equally, the arylpyrazole could be added to the bath after the heating step (a) to effect treatment during step (b).

The composition comprising the arylpyrazole of formula (I) may also comprise other active ingredients to protect the wood: the other active ingredient may be, for example an insecticide or fungicide.

The present invention also provides an improved heat-treated timber comprising an insecticidally and/or fungicidally effective amount of an arylpyrazole of formula (I) as treated according to the method of the present invention. Generally the timber according to the instant invention retains an amount of the arylpyrazole of formula (I) in a ratio of the arylpyrazole/volume of wood of from 0.01 to 80 g/m³, preferably from 0.1 to 30 g/m³, more preferably from 1 to 20 g/m³ .

The carrier generally comprises a solvent preferably one in which the arylpyrazole substantially dissolves at ambient temperature in order to increase wood penetration. Preferably the solvent is non-toxic to mammals. Generally the solvent is non-flammable. Preferably the solvent has a flash point of from -40°C to 200°C at atmospheric pressure.

The solvent generally has a low viscosity, preferably from 0.1 to 2.5 cp (centipoise) at 25°C, more preferably from 0.2 to 2 cp, most preferably from 0.3 to 1.5 cp. The composition of the invention generally comprises an organic-chemical solvent or solvent mixture and/or an oily or oil-like, poorly volatile organic-chemical solvent or solvent mixture and/or a polar organic-chemical solvent or solvent mixture and/or water and at least one emulsifier and/or wetting agent.

Preferably oily or oil-like solvents with an evaporation number above 35 and a flash point above 30°C, preferably above 45°C, are used as organic-chemical solvent. Corresponding mineral oils or their aromatic fractions or mineral oil-containing solvent mixtures, preferably white spirit, petroleum and/or alkylbenzene are used as such poorly volatile, water-insoluble, oily and oil-like solvents.

Mineral oils with a boiling range from 170 to 220°C, white spirit with a boiling range from 170 to 220°C, spindle oil with a boiling range from 250 to 350°C, petroleum or aromatics with a boiling range from 160 to 280°C, terpentine oil and the like are advantageously used.

In a preferred variant liquid aliphatic hydrocarbons with a boiling range from 180 to 210°C or high-boiling mixtures of aromatic and aliphatic hydrocarbons with a boiling range from 180 to 220°C and/or spindle oil and/or monochloronaphthalene, preferably alpha-monochloronaphthalene, are used.

The organic, poorly volatile oily or oil-like solvents with an evaporation number above 35 and a flash point above 30°C, preferably above 45°C, can be partially replaced by readily volatile or medium-volatile organic-chemical solvents, with the stipulation that the solvent mixture also has an evaporation number above 35 and a flash point above 30°C, preferably above 45°C, and that the arylpyrazole is substantially soluble or emulsifiable in this solvent mixture.

According to a preferred variant part of the organic-chemical solvent or solvent mixture or an aliphatic polar organic-chemical solvent or solvent mixture is replaced. Aliphatic organic-chemical solvents containing hydroxyl and/or ester and/or ether groups are preferably used, for example, glycol ethers, esters or the like.

The known water-dilutable and/or soluble or dispersible or emulsifiable artificial resins in the employed organic-chemical solvents and/or binding drying oil, especially binders consisting of or containing an acrylate resin, a vinyl resin, for example, polyvinyl acetate, polyester resin, polycondensation or polyaddition resin, polyurethane resin, alkyd resin or modified alkyd resin, phenol resin, hydrocarbon resin, like indene-coumarone resin, silicone resin, drying vegetable and/or drying oil and/or physically drying binders based on a natural and/or artificial resin are used as organic-chemical binder within the scope of the present invention.

The artificial resin used as binder can be used in the form of an emulsion, dispersion or solution. Bitumen or bituminous substances can be used up to 10 wt. % as binder. Known dyes, pigments, water repellent agents, odor-correction agents and inhibitors or corrosion inhibitors and the like can also be used.

At least one alkyd resin or modified alkyd resin and/or a drying vegetable oil in the agent or concentrate is preferably contained as organic-chemical binder according to the invention. Alkyd resins with an oil content of more than 45 wt. %, preferably 50 to 68 wt. %, are preferably used according to the invention.

The mentioned binders can be fully or partially replaced with a fixing agent (which may be a mixture) or a plasticizer (which may be a mixture). These additives are supposed to prevent volatilization of the active ingredients, as well as crystallization and precipitation. They preferably replace 0.1 to 30% of the binder (refer to 100% of the employed binder).

The plasticizers come from the chemical classes of phthalic acid esters, like dibutyl, dioctyl or benzylbutyl phthalate, phosphoric acid esters, like tributyl phosphate, adipic acid esters, like di-(2-ethylhexyl)adipate, stearates, like butyl stearate or amyl stearate, oleates, like butyl oleate, glycerol ethers or high molecular glycol ethers, glycerol esters, as well as p-toluenesulfonic acid esters.

Fixing agents are chemically based on polyvinylalkyl ethers, for example polyvinylmethyl ether or ketones, benzophenone, ethylbenzophenone.

Water is also considered a solvent or diluent, optionally mixed with one or more of the aforementioned organic-chemical solvents or diluents, emulsifiers and dispersants.

Wood that can be protected by the agent according to the invention or agents containing it is generally rough wood or unplaned wood, for example: Construction wood, wood boards, wood beams, railroad ties, bridge parts, jetties, wood vehicles, crates, pallets, containers, telephone poles or wood products that are generally used in house construction. Generally the timbers are integral pieces of wood.

Generally, the timbers are softwood or hardwood. Examples of the types of wood that may be used in the present invention include:

Pinaceae (pine) , oak, spruce, poplar, larch, birch, beech, maple, rubber wood, ramin, chesnut, eucalyptus, and cedar.

The composition comprises from 0.01 to 95 wt. %, especially 0.01 to 60 wt. % of the arylpyrazole.

The penetration of the arylpyrazole is generally good by the method of the instant invention, and generally good enough so as to provide the treated timber protection over a long period of time, at least a conservation long enough to provide a thorough protection against wood-damaging insects, especially termites. This protection is kept also when the timber is sawn so as to create boards. The protection provided to the boards is generally from 0.1 years to 15 years, preferably from 0.25 to 10 years, most preferably from 2 to 5 years.

For example, but without being limiting, the following and further wood-destroying insects can be mentioned:
Beetles
   *Hylotrupes bajulus, Chlorophorus pilosis, Anobium punctatuni, Xestobium rufovillosum, Ptilinus pecticomis, Dendrobium pertinex, Emobius mollis, Priobium carpini, Lyctus brunneus, Lyctus africanus, Lyctus planicollis, Lyctus linearis, Lyctus pubescenes, Trogoxylon aequale, Minthes rugicollis, Xyleborus spec. Tryptodendron spec. Apate monachus, Bostrychus capucins, Heterobostrychus brunneus, Sinoxylon spec. Dinoderus minutus*
Hymenopterans
   *Sirex juvencus, Urocerus gigas, Uroceeus, gigas taignus, Urocerus augus*
Termites
   *Kalotermes flavicollis, Cryptotermes brevis,* *Heterotermes indicola, Reticulitermes flavipes, Reticulitermes santonensis, Reticulitermes lucilugas, Mastotermes darwinienesis, Zootermopsis nevadensis, Coptotermes formosanus.*

For example, but without being limiting, the following wood-destroying fungi can be mentioned: soft rot, white rot, brown rot (and all the members of these families).

The present invention also provides a new composition comprising a heat-treated wood and an arylpyrazole in an amount effective to resist insects, for example, termites. Preferably the weight to volume ratio of the arylpyrazole to the wood is from 0.01 to 80 g/m³, preferably from 0.1 to 30 g/m³, more preferably from 1 to 20 g/m³ and most preferably from 3 to 6 g/m³.

The method of the invention may be followed by machining and/or forming the wood into a desired configuration.

The following example is given hereafter so as to illustrate the invention but is not to be understood as restricting the invention.

A timber (1 m x 27mm x 12 cm) is heated at 350°C in an oven with an inert gas atmosphere during 5 mn ; then the timber is cooled to 20 °C and dipped in an aqueous solution saturated with compound A during 1 h. The timber is shown to be protected both against termites and fungi.

## Claims

**1.** A method of protection of timber from fungi and/or insects comprising:
(a) heating the timber at a temperature and for a time effective to reduce its moisture and oil content;
(b) cooling the timber; and
(c) during or after steps (a) and (b) treating the timber with a liquid composition comprising a carrier and an arylpyrazole of formula (I): 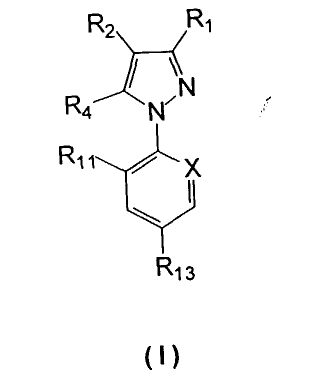 in which:
R₁ is CN or methyl or a halogen atom;
R₂ is -S(O)ₙR₃ or 4,5-dicyanoimidazol-2-yl or haloalkyl;
R₃ is alkyl or haloalkyl;
R₄ is selected from hydrogen, halogen, -NR₅R₆, -C(O)OR₇, S(O)ₘR₇, alkyl, haloalkyl, -OR₈ and - N=C(R₉)(R₁₀) and C(O)alkyl;
R₅ and R₆ are independently selected from a hydrogen atom, alkyl, haloalkyl, -C(O)alkyl, -C(O)OR₇, -S(O)ᵣCF₃;
or R₅ and R₆ together form a divalent alkylene radical which can be interrupted by one or two divalent heteroatoms, such as oxygen or sulfur;
R₇ is alkyl or haloalkyl;
R₈ is alkyl, haloalkyl or hydrogen;
R₉ is alkyl or hydrogen;
R₁₀ is selected from phenyl and heteroaryl each of which is unsubstituted or substituted by one or more halogen, hydroxy, -O-alkyl, -S-alkyl, cyano, or alkyl;
X is selected from nitrogen and C-R₁₂;
R₁₁ and R₁₂ are independently selected from halogen, hydrogen, CN and NO₂;
R₁₃ is selected from halogen, haloalkyl, haloalkoxy, S(O)_{q}CF₃ and -SF₅;
m, n, q, and r are independently selected from 0, 1, and 2;
provided that, when R₁ is methyl, R₃ is haloalkyl, R₄ is NH₂, R₁₁ is Cl, R₁₃ is CF₃ and X is N and provided that when R₂ is 4,5-dicyanoimidazol-2-yl, R₄ is Cl, R₁₁ is Cl, R₁₃ is CF₃ and X is =C-Cl.

**2.** A method according to claim 1 wherein the arylpyrazole is 5-amino-1-(2,6-dichloro-4-trifluoromethylphenyl)-4-trifluoromethylsulphinyl-3-cyanopyrazole.

**3.** A method according to claim 1 or 2 wherein at least 50% by volume of the moisture and oil mixture present in the wood is removed during the heating step (a).

**5.** A method according to any one of the preceding claims in which, during the heating step (a), the wood is maintained at its glass transition temperature until the wood has reached, in its entirety, that temperature.

**6.** A process according to any one of the preceding claims in which, during the heated step (a) the heating temperature causes decomposition of hemicellulose in the wood and that decomposition is monitored by detecting gases generated by the decomposition.

**7.** A method according to any one of the preceding claims in which the composition comprising the arylpyrazole remains in contact with the wood from 0.25 to 96 hours.

**8.** A method according to any one of the preceding claims followed by machining and/or forming the treated wood into a desired configuration.

**9.** Heat treated wood comprises an insecticidally and/or fungicidally effective amount of an arylpyrazole of formula (I) as defined in claim 1.

**10.** Heat treated wood according to claim 9 in which the ratio of the arylpyrazole/volume of wood is from 0.01 to 80 g/m³.
